# EUROPEAN PATENT SPECIFICATION

(11) **EP 3 806 664 B1**
(45) Date of publication and mention of the grant of the patent: **22.05.2024**
(21) Application number: 19819542.2
(22) Date of filing: 13.06.2019
(51) Int. Cl.: A23P 20/00, A23P 20/10, A23G 3/00, A23G 4/00, A23L 5/40, A23L 5/42, C01F 11/18, A23G 1/30, A23G 1/32, A23G 1/54, A23G 3/34, A23G 3/36, A23G 4/06, A23G 3/54, A23G 4/20

(54) **EDIBLE CONFECTIONERY COATINGS INCLUDING CALCIUM CARBONATE**
ESSBARE SÜSSWAREN MIT CALCIUMCARBONAT
ENROBAGES DE CONFISERIE COMESTIBLES COMPRENANT DU CARBONATE DE CALCIUM

(30) Priority: 15.06.2018 US 201862685387 P
(43) Date of publication of application: 21.04.2021
(73) Proprietor: Wm. Wrigley Jr. Company, Chicago, IL 60642 (US)
(72) Inventor: ANDERSON, Brent, Chicago, Illinois 60642 (US); COLLINS, Tom, Chicago, Illinois 60642 (US); KRONEBERGER-STANTON, Kevin, Chicago, Illinois 60642 (US); POWELL, Delicia, Chicago, Illinois 60642 (US)
(74) Representative: Haseltine Lake Kempner LLP
(86) International application number: PCT/US2019/036910
(87) International publication number: WO 2019/241478

(56) References cited:
- WO-A1-2010/079103
- CA-A1- 3 033 785
- US-A1- 2013 164 356
- US-A1- 2016 015 054
- US-B2- 9 492 395
- "SPECIALITY MINERALS INC. ), a technical article", ViCALity Medium, 2013, pages 1-2, XP055762118, Retrieved from the Internet: URL:https://www.mineralstech.com/docs/defa ult-source/company/vicality-medium.pdf?stv rsn=2000b3e2_2

## Description

### FIELD

The presently disclosed subject matter relates to novel coatings comprising scalenohedral calcium carbonate (CaCO₃). The coatings of the present application provide a desired whiteness and opacity, while successfully interfacing with confectionery coating techniques.

### BACKGROUND

US949395 discloses a film coating composition comprising a cellulosic polymer, an opacifying agent, and a fatty acid. The opacifying agent may be calcium carbonate.

Coated confectioneries are enjoyed by consumers for the multisensory consuming experience they provide. That is, the coating typically provides a different texture and flavor than the underlying confection, and such confections can be provided in a variety of sizes, flavors, and colors. Providing such confections in the vast array of possible combinations of flavors, tastes, textures and colors can be challenging. Producing vibrant colors in particular can be difficult, especially when the underlying confection is darker colored, and even more so when differently colored than the overlying coating, or when natural colors are used.

Pigment grade titanium dioxide (TiO2) is often used as a white pigment in a variety of applications, including paints, glazes, and colorants, and across a variety of industries including home goods, construction, paper products, consumer products, personal care products, and cosmetics. Edible pigment grade titanium dioxide is also commonly used to provide a desirable white color or to provide opacity in an under layer to brighten a subsequent colored layer in various food and confectionery products, including coated confectionery products that are either white, or contain color. Conventionally, titanium dioxide has been utilized in panned coatings in order to provide an opaque and white substrate on which to apply colored layers of the panned coating. The opacity provided to a coating that is precoated with titanium dioxide allows the colored layers applied thereover to exhibit a more true color. Other white materials do not provide the same level of opacifying effect as titanium dioxide. For example, when colored layers are applied over, e.g., calcium carbonate, they do not exhibit the same true color as when the same colored layer(s) is applied over a pre-coat comprising titanium dioxide. Often, alternatives to titanium dioxide such as calcium carbonate, calcium sulphate or talc often have very low contrast ratios and only the inclusion of titanium dioxide imparts the desired opacity to coated confectionery products.

Confectionery products such as chewing gums, candies, and chocolates are frequently enclosed in soft or hard coatings. Coatings provide an opportunity for the manufacturer to vary product characteristics such as taste, appearance and nutritional value. In recent years, efforts have been devoted to producing coatings having a white appearance without the use of titanium dioxide. Additional efforts have been made in producing coatings with natural colors with the same color shade and intensity as coating containing artificial colors which often include titanium dioxide. The coatings can be made from a variety of sugar-containing syrups or sugar-free syrups. Other ingredients can be included in the coating syrups as well, such as flavors, sweeteners, binders, and colors. Often, the colors used in confectionery coatings are also enhanced by titanium dioxide.

However, there is growing interest in using white and colored coating compositions that do not contain titanium dioxide in food products. Various non-artificial white materials, including CaCO₃ and rice starch, have been considered for use as an opacifier in hard or soft-panned coatings. Unfortunately, these materials may require usage rates that are impractical for certain applications or do not provide the same level of opacity as titanium dioxide in some processes; colored layers applied over such materials would not be expected to exhibit the same true color as when those colored layers are applied over titanium dioxide-based layers.

Thus, from a consumer standpoint, there is a need for improved confectionery coating formulas that do not include titanium dioxide. The presently disclosed subject matter addresses these and other needs as discussed in detail below.

### SUMMARY OF THE INVENTION

Confectionery coatings pigmented with calcium carbonate, calcium sulphate or talc often have very low contrast ratios and lack the desired opacity and whiteness. Only the inclusion of titanium dioxide imparts the desired opacity and whiteness to such coatings. The present application provides confectionery coatings comprising scalenohedral calcium carbonate particles. The scalenohedral calcium carbonate particles can be used as an opacifier to provide a coating that appears white, or alternatively, when color is also included in the coating, scalenohedral calcium carbonate can be incorporated into an underlayer which provides a desired color and appearance of a finished colored coating.

The present invention discloses an edible coating, comprising scalenohedral calcium carbonate particles in an amount of from about 1 wt-% to about 30 wt-% by weight of coating, wherein the coating comprises sugar.

In certain aspects, the present application provides a confectionery coating. The confectionery coating includes scalenohedral calcium carbonate particles and, when added to a coating syrup and dried, exhibits an L* value of at least 65. In an alternative aspect, the confectionery coating is applied as a pre-coat to an edible core which is subsequently coated with a color layer and the finished color of the coating exhibits a lightness value L* and chroma value C* which are increased by about 1 compared to the values of the edible coating that does not contain an opacifier.

The present application further provides coated food products comprising scalenohedral calcium carbonate. For example, the food product can be a confectionery product.

In certain aspects, the confectionery product can be a hard-panned candy. In other aspects, the confectionery product is a soft-panned candy.

More specifically, the hard-panned coating comprises multiple sugar syrup layers, wherein at least one, several, or all of the multiple sugar syrup layers comprise scalenohedral calcium carbonate. In some aspects, the addition of the scalenohedral calcium carbonate can act to replace a conventional opacifier, such as titanium dioxide, in the precoat or other layers, or the layers in direct contact with an edible core of the confectionery coating.

The scalenohedral calcium carbonate of the present application acts as a replacement for conventional opacifiers (i.e, titanium dioxide, starch), and so, the hard-panned coating does not comprise titanium dioxide in any of the sugar syrup layers. Methods of manufacturing coated confectionery products are also disclosed herein. In one aspect, the method comprises the steps of providing a confectionery center; coating the confectionery center with a first coating syrup comprising a crystallizing sugar and scalenohedral calcium carbonate particles and drying the syrup to form a first coating layer; coating the first coating layer with a second coating syrup comprising a crystallizing sugar and with or without scalenohedral calcium carbonate and drying the syrup to form a second coating layer; coating the second coating layer with a third coating syrup comprising a crystallizing sugar, with or without a colorant, and with or without a flavorant and drying the syrup to form a third coating layer; and coating the third coating layer with a fourth coating comprising a polishing agent to provide a sugar based hard coated confectionery. Each coating syrup can be applied in multiple layers to build a particular coating section. For example, a first coating syrup can be applied (layered) one time, or up to 50 times onto a confectionery center with appropriate drying to form a first coating section; afterward, the second coating syrup can be applied (layered) one time, or up to 50 times onto the first coating section with appropriate drying to form a second coating section.

The present invention also discloses a method of edible coating a food product to form a food product of claim 8, the method comprising:
a) providing a surface of a food product;
b) contacting a coating syrup comprising scalenohedral calcium carbonate particles with the surface of the food product; and
c) contacting the coating syrup comprising the scalenohedral particles with additional coating syrups that are free of scalenohedral calcium carbonate particles.

The foregoing has outlined broadly the features and technical advantages of the present application in order that the detailed description that follows can be better understood. Additional features and advantages of the application will be described hereinafter which form the subject of the claims of the application. It should be appreciated by those skilled in the art that the conception and specific aspect disclosed can be readily utilized as a basis for modifying or designing other structures for carrying out the same purposes of the present application. It should also be realized by those skilled in the art that such equivalent constructions do not depart from the spirit and scope of the application as set forth in the appended claims. The novel features which are believed to be characteristic of the application, both as to its organization and method of operation, together with further objects and advantages will be better understood from the following description.

### BRIEF DESCRIPTION OF THE DRAWINGS

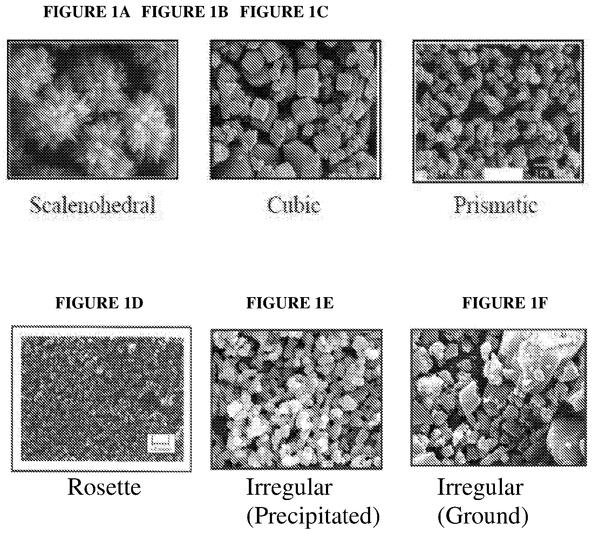

**Figs. 1A-1F** provide a graph comparing the different morphologies of calcium carbonate.

### DETAILED DESCRIPTION

As noted above, to date there remains a need in the art for an edible coating that does not contain titanium dioxide, but which is able to provide desirable whiteness, opacity, and improved color of final color layers. The present application provides such coated confectioneries, which include scalenohedral calcium carbonate particles as a whitener or as an opacifier. These coatings are food-safe and can be used to provide whiter, or more opaque under layers, which enhance the brightness of subsequent color layers, such as natural colors, to a variety of food products, confectionery products, and snack food products.

The present application further provides coated food products comprising scalenohedral calcium carbonate. For example, the food product can be a confectionery product. The confectionery center can comprise jelly candies, pressed tablets, mints, chewy candies, hard boiled candies, chocolates, nougats, licorice, taffy, gels, solid foam, crystallized pastes, rework, or combinations thereof. The confectionery center can also comprise a chewing gum.

In certain embodiments, the confectionery product can be a hard-panned candy. In other embodiments, the confectionery product is a soft-panned candy.

More specifically, the hard-panned coating comprises multiple sugar syrup layers, wherein at least one, several, or all of the multiple sugar syrup layers comprise scalenohedral calcium carbonate. In some embodiments, the addition of the scalenohedral calcium carbonate can act to replace a conventional opacifier, such as titanium dioxide, in the precoat or other layers, or the layers in direct contact with an edible core of the confectionery coating.

In one aspect, a hard-panned coating comprising multiple sugar syrup layers is provided. Less than all of the sugar syrup layers comprise an amount of one or more syrup layers containing scalenohedral calcium carbonate. In another aspect, all of the sugar syrup layers contain scalenohedral calcium carbonate to make a white coating. The sugar desirably comprises a natural sugar, such as sucrose or glucose (dextrose). In some embodiments, the sugar comprises sucrose. In yet another embodiment, not part of the present invention, the syrup layers are sugar-free, comprising xylitol, sorbitol, maltitol, mannitol, isomalt, or erythritol. In some embodiments, according to the invention, the sugar syrup or in some other embodiments, not according to the invention, the sugar-free syrup may also include flavors or high potency sweeteners.

The scalenohedral calcium carbonate of the present disclosure acts as a replacement for conventional opacifiers (i.e, titanium dioxide, starch), therefore the hard-panned coating does not comprise titanium dioxide in any of the sugar syrup layers. Methods of manufacturing coated confectionery products are also disclosed herein. In one aspect, the method comprises the steps of providing a confectionery center; coating the confectionery center with a first coating syrup comprising a crystallizing sugar and scalenohedral calcium carbonate particles and drying the syrup to form a first coating layer; coating the first coating layer with a second coating syrup comprising a crystallizing sugar and with or without scalenohedral calcium carbonate and drying the syrup to form a second coating layer; coating the second coating layer with a third coating syrup comprising a crystallizing sugar, with or without a colorant, and with or without a flavorant and drying the syrup to form a third coating layer; and coating the third coating layer with a fourth coating comprising a polishing agent to provide a sugar based hard coated confectionery. Each coating syrup can be applied in multiple layers to build a particular coating section. For example, a first coating syrup can be applied (layered) one time, or up to 50 times onto a confectionery center with appropriate drying to form a first coating section; afterward, the second coating syrup can be applied (layered) one time, or up to 50 times onto the first coating section with appropriate drying to form a second coating section.

In another aspect, the coated confectionery products are soft based coatings. A typical soft panning process generally includes applying a coating of a noncrystallizing syrup solution followed by a coating of a crystallizing syrup. This process is repeated until the desired number of coatings have been obtained. In certain processes, the soft coating can be formed by adding a dry charge or powder coating before or after a liquid coating. The dry charge may comprise natural carbohydrate gum hydrolysates, maltodextrin, gelatin, cellulose derivatives, starches, modified starches, sugars, sugar alcohols (i.e. polyols), natural carbohydrate gums and fillers like talc and calcium carbonate.

In alternative methods, not part of the invention, a sugar-free coating is provided. All, or less than all of the sugar-free syrup layers comprise one or more sugar-free syrup layers containing scalenohedral calcium carbonate. Each layer is dried prior to application of the next. In some embodiments, according to the invention one or more sugar syrups or not according to the invention sugar-free syrups comprising scalenohedral calcium carbonate particles are applied to a prepared surface of an edible core. In other embodiments, according to the invention at least one sugar syrup or not according to the invention sugar-free syrup comprises scalenohedral calcium carbonate and/or at least one sugar or sugar-free syrup not comprising scalenohedral calcium carbonate does not comprise titanium dioxide. The syrups containing the scalenohedral calcium carbonate may be added and dried as a precoat layer.

### 1. Definitions

The terms used in this specification generally have their ordinary meanings in the art, within the context of this disclosed subject matter and in the specific context where each term is used. Certain terms are discussed below, or elsewhere in the specification, to provide additional guidance to the practitioner in describing the compositions and methods of the disclosed subject matter and how to make and use them.

As used herein, the use of the word "a" or "an" when used in conjunction with the term "comprising" in the claims and/or the specification can mean "one," but it is also consistent with the meaning of "one or more," "at least one," and "one or more than one." Still further, the terms "having," "including," "containing" and "comprising" are interchangeable and one of skill in the art is cognizant that these terms are open-ended terms.

The term "about" or "approximately" means within an acceptable error range for the particular value as determined by one of ordinary skill in the art, which will depend in part on how the value is measured or determined, *i.e.*, the limitations of the measurement system. For example, "about" can mean within 3 or more than 3 standard deviations, per the practice in the art. Alternatively, "about" can mean a range of up to 20%, preferably up to 10%, more preferably up to 5%, and more preferably still up to 1% of a given value.

As used herein, "food product" or "food product composition" includes ingestible products including but not limited to human foods, animal or pet foods, pharmaceutical products, and consumer products.

As used herein, the term "confectionery product" refers to a sweet or dessert food product. Confectionery products with surfaces suitable for an edible coating can include, but are not limited to, candies (hard and soft), compressed mints, chewing gums, gelatins, chocolates, fudge, fondant, liquorice, taffy, frozen confections, ice cream, and combinations thereof.

As used herein, the term "snack food product" refers to a sweet or savory food product, such as fruit snacks, chips/crisps, extruded snacks, tortilla/corn chips, popcorn, pretzels, nuts, granola/muesli bars, breakfast bars, energy bars, fruit bars, other snack bars, and combinations thereof.

As used herein, an "edible coating" means the final coating composition that may include one dried coating syrup layer, or multiple dried coating syrup layers wherein each coating syrup has distinct properties, or different ingredients. For example, a finished coating may comprise a first dried coating syrup layer, a second dried coating syrup layer, a third dried coating syrup layer and a polishing layer.

As used herein, a "coating syrup" applied to a food or confectionery product means an application of a coating syrup that surrounds a center or core. A coating syrup section can comprise multiple layers and a layer typically refers to an individual application of a coating syrup that is subsequently dried and crystallized. The total coating can be thought of as having different sections and each section can be comprised of multiple layers. The total finished coating can be created using any number of coating sections and the number of layers comprising a coating section can vary.

The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced item, and the terms "front", "back", "bottom", and/or "top", unless otherwise noted, are merely used for convenience of description, and are not limited to any one position or spatial orientation.

The terms "color" and "color characteristics" are used interchangeably, and encompass color properties such as hue, chroma, and value, and color model system parameters used to describe these properties, such as Commission Internationale de l'Eclairage CIE 1976 CIELAB color space L*a*b* values and CIELCH color space L*C*h° values. The CIELAB and CIELCH color models provide more perceptually uniform color spaces than earlier color models. Colorants are analyzed with a spectrophotometer, and CIELAB L*a*b* and CIELCH L*C*h° values are calculated from the spectral data. The L*a*b* and L*C*h° values provide a means of representing color characteristics and assessing the magnitude of difference between two colors. The L*a*b* and L*C*h° values reported herein were calculated based on spectral data obtained with a Konica Minolta Spectrophotometer CM-3500d operated in reflectance mode with a D65 illuminant and 10° observer angle.

The term "reflectance" as used herein with respect to a material is the percentage of any incident electromagnetic radiation that reflects back from a surface. Reflectance is a function of wavelength, and the reflectance of a material can vary across the electromagnetic spectrum. A material that is a perfect reflector at a particular wavelength has a reflectance of 100% at that wavelength.

The term "lightness" as used herein is the perceived whiteness of a particular material when measured under a standard illuminant, *e*.*g*., CIE Standard Illuminant D65, and is the lightness component of the material in the L*a*b* or L*C*h° color spaces (*i.e.*, the Commission Internationale de l'Eclairage CIE L*a*b* values, established in 1976). Lightness as used herein can alternatively be termed "value," "tone," or "L*." As used herein, the maximum value for lightness is 100, corresponding to white, and the minimum value is zero, corresponding to black.

As used herein, "chroma" means the quality of a color's purity, intensity or saturation. The measure of chroma ranges from 0, which is completely unsaturated (i.e, a neutral gray, black or white) to typically 100 for very high saturation or color purity.

As used herein, "opacity" is the lack of transparency or translucence of a coating. The opacity of coatings containing a variety of pigments and fillers are assessed using a contrast ratio defined as the ratio of the measured reflectance of the incident light when the film is placed on a black substrate to the measured reflectance of the incident light when the film is placed on a white substrate.

As used herein, "viscosity" refers to the dynamic or shear viscosity of a material, *e.g.*, a liquid edible coating. Viscosity is indicative of the thickness of the material, or its resistance to flow. Viscosity can be expressed in terms of centipoise (cP). Viscosity can be measured using a viscometer, e.g., a Brookfield RVDV-II+ Viscometer equipped with a small sample adapter at an RPM of 100.

As used herein, the term "weight percent" or "wt-%" is meant to refer to the quantity by weight of a component in a material (e.g., an edible coating) as a percentage of the total wet weight of the material.

As used herein, the term "substantially scalenohedral shape" means that the calcium carbonate particles are not limited to any particular number of faces.

### 2. Calcium Carbonate

The presently disclosed edible coatings can include calcium carbonate, *i.e.*, scalenohedral calcium carbonate particles. As used herein, "scalenohedral" refers to a particle shape or crystal morphology, wherein approximately every face of the particle is a scalene triangle (*see* Figure 2A). The scalenohedral particles described herein are not limited to any particular number of faces, and need not be strictly scalenohedrons as long as the particles have a substantially scalenohedral shape.

Precipitated calcium carbonate exists in three primary crystalline forms: calcite, aragonite, and vaterite, with calcite being the most stable polymorph of calcium carbonate. There are many different polymorphs (crystal habits) for each of these crystalline forms. Calcite has a trigonal structure with typical crystal habits such as scalenohedral, rhombohedral, hexagonal prismatic, pinacoidal, colloidal, cubic, or prismatic. Scalenohedral calcium carbonate has been found to exhibit desirable light-scattering properties when incorporated into edible confectionery coatings. Further non-limiting examples of suitable scalenohedral particles include ViCALity particles (Minerals Technologies, Inc.), for example, ViCALity^{™} Light, ViCALity^{™} Extra Light, and ViCALity^{®} Medium Precipitated Calcium Carbonate particles.

Without being bound to any particular theory, Applicant has surprisingly found that the morphology and median particle size in the range of 0.5 µm to about 5 µm of scalenohedral calcium carbonate particles added to sugar or sugar-free coatings which are applied to an edible coating allows for effective distribution of the scalenohedral CaCO₃ with the other ingredients in the syrup to provide a coating that assists in making whiter coatings, or brighter colored coating of the dried, finished edible coating composition without a traditional opacifier such as titanium dioxide. The layers containing the scalenohedral CaCO₃ are applied as part of the first or base coating section or applied as part of the second coating section. When applied to making a white colored coated product, the addition of scalenohedral calcium carbonate to the coating syrup(s) surprisingly resulted in a very bright and white finished coated product. When making white candy, the scalenohedral calcium carbonate can be incorporated into any or all of the first, second, third, or more sections of the coating.

The scalenohedral calcium carbonate particles of the present application can have a median particle size ranging from about 0.5 µm to about 5 µm, or from about 0.5 µm to about 3 µm, or from about 1 µm to about 3 µm, or from about 1.5 µm to about 3 µm.

A coating comprising the scalenohedral calcium carbonate particles includes a suitable amount of scalenohedral calcium carbonate particles. In an aspect of the present application, the scalenohedral calcium carbonate is precipitated. For example, in certain aspects, an edible coating can include less than about 30 wt-% scalenohedral calcium carbonate particles, or less than about 25 wt-%, or less than about 20 wt-%, or less than about 15 wt-%, or less than about 10 wt-%, scalenohedral calcium carbonate particles. In other aspects, an edible coating can include from about 1wt-% to about 30 wt-% of a coating surrounding an edible core. In yet another aspect, the edible coating includes 1 wt-% to about 25 wt-%, 10 wt-% to about 15 wt-%, or from about 12 wt-% to about 14 wt-%, or from about 1 wt-% to about 10 wt-%, or from about 15 wt% to about 30 wt% scalenohedral calcium carbonate particles.

Alternatively, the edible coating contains at least two different median particle size ranges of the scalenohedral calcium carbonate particles. For example, in certain aspects, the edible coating composition contains from about 20 wt-% to 50 wt-% of scalenohedral calcium carbonate particles ranging from about median particle size of 0.5 µm to about 1 µm, and 20 wt-% to 50 wt-% of particles ranging from about 1 µm to about 3 µm median particle size. In another aspect, the edible coating composition contains from about 20 wt-% to 50 wt-% of scalenohedral calcium carbonate particles ranging from about 1 µm to about 1.5 µm median particle size, and 20 wt-% to 50 wt-% of particles ranging from about 1.5 µm to about 2 µm median particle size.

The calcium carbonate particles can be prepared using any suitable method as known in the art. The preparation method can be chosen based on the desired scalenohedral shape and size of the calcium carbonate particles.

### 3. Coatings

Panning of food pieces to produce an outer coating on the food piece is well known in the art. Panning involves rotating a pan or drum containing food pieces to be coated in a pan or kettle while drizzling or spraying on a coating material. The rotation rate, temperature, application rate, roll-in-time, and drying cycle are selected to ensure complete and full coating of the food pieces. The coating is actually built up as a plurality of layers on the food piece. The most common coatings include sugar-based coatings such as found on various hard-panned candies. The coating is a sugar based coating to make hard-panned candies.

Another class of sugar-based coatings comprises alternating applications of an engrossing syrup comprising a liquid syrup and a drying sugar that builds thicker layers. This typically results in a non-brittle but firm shell due to larger sugar crystals present in these coatings and the product is considered a soft-panned candy. The most common food pieces coated in this manner are jelly beans.

As an overall class, hard-panned sugar-based or polyol coatings tend to be harder than soft-panned coatings. One class of sugar-based coatings is comprised of multiple layers of a coating syrup that is a thin sugar syrup that must be dried between applications and that results in a very thin, hard, brittle shell due to formation of very small sugar crystals during the panning process. Common food pieces coated in this manner include chewing gum pieces, chocolate pieces, sugar toffee pieces and other hard-panned candy pieces.

In the present application, a hard-panned coating comprises multiple layers of dried and crystallized sugar syrup, only some of which further comprise scalenohedral calcium carbonate particles. In an alternative aspect, all of the coating syrups which are subsequently dried to create dried sugar layers applied to center or core to create an edible coating further comprise scalenohedral calcium carbonate. It has now been surprisingly discovered that the use of scalenohedral calcium carbonate particles in at least one coating syrup of a hard-panned coating composition can allow the replacement of the titanium dioxide conventionally included in some sugar or sugar-free syrup layers. It is even more surprising that it is not necessary to use the scalenohedral calcium particles in all the layers of the hard-panned coating to achieve superior results. This use of scalenohedral calcium carbonate particles, i.e., as a titanium dioxide replacement in panned coatings, has not previously been appreciated in the art.

As embodied herein, the edible coating can have additional properties to facilitate the application of the edible coatings to various confectionery surfaces, including but not limited to candies (hard and soft), compressed mints, chewing gums, gelatins, chocolates, toffees, fudge, fondant, liquorice, taffy, and combinations thereof. Especially desirable, are coatings that are chocolate or chocolate flavored. Applicant has surprisingly found that coatings containing scalenohedral calcium carbonate performed better as an opacifier in hard sugar-based coatings than other types of calcium carbonate as a replacement for titanium dioxide.

The present application relates to coatings including scalenohedral calcium carbonate particles. The coating can produce a white color, or opacity and whiteness under another colorant when incorporated into a coating. The edible coating can have optical properties similar to those exhibited by coatings containing titanium dioxide in order to produce a white edible coating that can be used in place of coatings containing titanium dioxide or brighter edible coatings containing colors with increased values of L* and C*.

In particular aspects, the edible coating is applied to the surface of a hard-panned confectionery product. A hard-panned confectionery product can comprise a center core and at least one coating layer containing crystallized sugar. For example, and not by way of limitation, a hard-panned confectionery product can comprise a plurality of coating layers. In the case of hard-panned confections, we typically think about a coating as having 4 sections. The first or base section is typically that closest to the center of the product and adherence of the base section to the center is an important property. The second section can comprise layers built up from applications of sugar syrup. The third section can comprise additional layers built up from applications of sugar syrup and comprising one or more colorants if a colored finished coated product is desired. The colorant is typically mixed into the syrup for the third section. Finally, the fourth section can be a polish and is usually very thin. An opacifying and whitening material can typically be included in the base/first and or second sections for colored products. In the case of a white finished coated product, an opacifying material can be included in the base/first, second, and third sections of the coating.

For example, and not by way of limitation, the edible core can comprise chocolate. In certain aspects, the surface of the hard-panned confectionery product can further comprise a polish coating that is applied after to the edible coating.

The hard-panned confectionery product can be a dragée type confectionery product. Non-limiting examples of the type of cores in a dragée type confectionery product can include a natural center (*e*.*g*., almond, hazelnut or groundnut) or a "confectionery" center (*e*.*g*., caramel, chewing gum, fondant or chocolate). The cores can be a natural center, such as a peanut, which is then coated with a fat based coating such as chocolate or chocolate flavored compound coating, before being coated with successive layers of crystallizing sugars or other substances such as polyols, gums and natural polymers that can further include one or more color compositions of the present application. Sugar syrups typically include, but are not limited to sucrose or dextrose. Sugar syrups may contain small amounts of a second sugar, so long as the second sugar does significantly interfere with the crystallization of the primary sugar. Polyol syrups include, but are not limited to xylitol, erythritol, maltitol, mannitol and isomalt. Polyol syrups may contain small amounts of a second polyol, so long as the second polyol does not significantly interfere with the crystallization of the primary polyol. In some unique cases, a polyol such as mannitol or erythritol may be added in somewhat larger amounts to another polyol without compromising crystallization.

Additional components such as high potency sweeteners, including but not limited to stevia and its glycosides, aspartame, acesulfame-k, and sucralose as well as flavors, including but not limiting to orange, berry, peppermint, apple, peanut butter, cinnamon, and cherry, may also be added to a coating syrup.

Pan-coated confectioneries and methods of manufacturing panned confections are disclosed herein. Panning is a process whereby a plurality of centers, such as a confectionery center, are mixed in a revolving pan and coated with one or more coatings. A panning process can be used to apply a soft coating or a hard coating to a confectionery center. The present application is applicable to both hard and soft-panned coatings.

In certain aspects, the methods for manufacturing hard-panned confectionery products can comprise the deposition of a plurality of layers, for example between about 5 and about 60, by a succession of phases of application and drying carried out, for example, in a pan. In a hard-panning process, multiple applications of a highly concentrated sugar syrup can be used to build up the uncolored portion of a sugar coating on an edible product center. This can be followed by multiple applications of a concentrated sugar syrup containing a colorant composition. In certain aspects, the hard-panning process comprises the repetitive application of thin layers of a coating solution or composition onto an intermixed mass of centers, and the drying of each layer of coating solution or composition during which the sugar in the coating crystallizes and the water is evaporated between the applications of layers of syrup.

The reflectance and lightness of a coated food product can appear as "bright" white when the edible coating containing the scalenohedral CaCO₃ is applied and dried on an edible core. In a preferred aspect, the edible coating containing the scalenohedral CaCO₃ is the first coating syrup applied to the edible core. Higher values of reflectance and lightness of an edible coating indicate that the edible coating would be perceived as having a brighter white color. In certain aspects, the edible coating can produce a bright white with good opacity when placed over a darker background. As embodied herein, the edible coating can also have a suitable opacity when dried to ensure no light transmission to the underlying surface, thereby ensuring that the surface beneath the dried edible coating does not directly alter the perceived color of the finished edible coating.

In certain aspects, when the coating has a white appearance, it can have a certain reflectance in a portion of the electromagnetic spectrum. The edible coating can reflect light within the range of the visible spectrum (i.e., from about 390 nm to about 700 nm).

In addition to reflectance, the coating can also have a certain lightness, as measured under a reference standard illuminant, e.g., the CIE Standard Illuminant D65. D65 is a standard illuminant approximating the color of midday outdoor daylight in Northern and Western Europe. It can be used as a light source to test the color properties of materials as they would appear under midday outdoor daylight in this region. The use of a reference standard illuminant as a light source enables the color properties of materials to be accurately compared to each other. In certain aspects, when prepared as a dried coating formula on a confectionery center and tested under D65 illumination, the edible coating can have a lightness L* value of at least about 40, at least about 50, at least about 60, at least about 65, at least about 70, at least about 75, at least about 80, or even about 85 in the case of a substantially white colored edible coating.

Additionally, or alternatively, the color profile of the edible coating can be defined in terms of other components of the L*a*b* color space. For example, the edible coating can preferably have a value of b* that is close to zero. For example, in certain aspects, the edible coating can have a b* value of from about +10 to about -10, or from about +5 to about -5, or from about +3 to about -3. For example, the edible coating can have a value of a* that is from about -2.5 to about 0. Although described in terms of edible white coatings, it should be understood that the edible coating can be combined with other pigments or dyes to formulate other colors. For example, in certain aspects, the edible coating can be combined with a black pigment or dye to form a gray coating. Suitable black pigments include iron oxides, vegetable carbon black, artificial edible dyes or natural dyes.

Hence, the syrups may also desirably comprise one or more colorants, and typically, colorants are applied in the outer coating syrup layers. Any desired colorant may be used, so long as the colorant is approved for use in food. Natural or synthetic colorants may be used. Artificial colors approved for use in food in the US and the European Union (EU designation in parentheses) include FD&C Blue No. 1 (Brilliant Blue FCF E133), FD&C Blue No. 2 (Indigotine E132), FD&C Green No. 3 (Fast Green FCF E143), FD&C Red No. 40 (Allura Red AC E129), FD&C Red No. 3 (Erythrosine E127), FD&C Yellow No. 5 (Tartrazine E102) and FD&C Yellow No. 6 (Sunset Yellow FCF E110). Some additional synthetic colorants approved for use in the European Union include Quinoline Yellow E104, Carmoisine E122, Ponceau 4R E124, Patent Blue V E131 and Green S E142. Useful food colorants that are often referred to as 'natural' are also known, such as, for example, caramel coloring (E150), annatto (E160b), Chlorophyllin (E140), Cochineal (E120), Betanin (E162), Turmeric (curcuminoids, E100), Saffron (carotenoids, E160a), paprika (E160c), Lycopene (E160d), and fruit and vegetable juices. Certain fruits and vegetables can be sources of anthocyanins and juices or extracts from these fruits and vegetables can be used as food colorants to provide red, purple and in some cases blue colors depending on pH. Combinations of synthetic and/or natural colorants may be used, i.e., two or more synthetic colorants may be used, one or more natural colorants and one or more synthetic colorants, or two or more natural colorants are suitable.

Colorants may be available for use in food as either dyes or lakes. Dyes are soluble in water, but insoluble in oil, and provide color via dissolution in a food matrix. Lakes, on the other hand, are soluble in neither oil nor water, and provide color via dispersion in a food matrix, such as that provided by the sugar syrup.

Colorants are available in liquid or dry (powder) forms. Suitable concentrations of liquid natural colorants can range from 0.01 wt-% to 20 wt-%, or from 0.05 wt-% to 15 wt-%, or from 0.1 wt-% to 10 wt-%, while suitable concentrations of liquid synthetic colorants can range from 0.01 wt-% to 5.0 wt-%, or from 0.05 wt-% to 4.0 wt-%, or from 0.1 wt-% to 3.0 wt-%. Alternatively, for powder colorants, the concentrations would be lower than those in liquid, and in general, powder color concentrations can range from 0.01 wt-% to 5.0 wt-%. As embodied herein, in addition to color properties, the edible coating can have additional properties to facilitate the application of the edible coatings to various confectionery surfaces, including but not limited to jelly candies, pressed tablets, mints, chewy candies, hard boiled candies, chocolates, nougats, fondants, nuts, nutmeats, fudge, licorice, taffy, gels, solid foam, crystallized pastes, ice cream, or combinations thereof. The confectionery center can also comprise a chewing gum.

In an aspect of the invention, the finished edible coating contains the scalenohedral calcium carbonate in an amount of from about 1 wt-% to about 30 wt-%, or from about 1wt-% to about 25 wt-%, or from about 10 wt-% to about 15 wt-%, or from about 12 wt-% to about 14 wt-%, or from about 1 wt-% to about 10 wt-%, or from about 15 wt-% to about 30 wt-% of the coating.

In another aspect of the invention, the finished edible coating contains 1 wt-% to about 30 wt-% scalenohedral calcium carbonate to produce a coating with a white color without the use of titanium dioxide. The L* valued achieved to produce a suitable "white" with scalenohedral calcium carbonate in an edible coating is greater than 65. (Note 0 = no lightness (i.e. absolute black), and 100 = maximum lightness (i.e. absolute white)). In yet another aspect, the L* or C* values of colored coated products increases by 1,2,3,4,5,6 or more when scalenohedral calcium carbonate particles are applied in a section of the coating beneath the color containing section or layers of an edible coating as compared to the same edible coating that does not contain an opacifier (e.g.., titanium dioxide).

In a preferred aspect, the coating syrup containing the scalenohedral calcium carbonate particles is applied to an edible core in the early, or at the initial phase of the coating process. In some aspects, chocolate, or a chocolate flavored fat based coating, may be applied directly to the surface of an edible core, such as a nutmeat and then subsequently coated with layers of crystallizing syrup. In other aspects, syrups may be applied as coating layers to a prepared surface of an edible core, wherein the surface has been prepared according to a known technique including, but not limited to, gumming, isolating, and stabilizing. As the phrase that follows in quotation marks is used herein, the application of a sugar syrup as a coating layer "to an edible core" does not necessarily denote that the sugar syrup is applied directly to the edible core. Rather, a sugar syrup that is applied as a coating layer "to an edible core" may be applied directly to the surface of the edible core, or to a prepared surface of an edible core, or to a crystallized sugar syrup layer overlying any number of coating layers overlying the edible core, within the meaning of the phrase.

These coatings may be formed from layering coating syrups comprising or not comprising the scalenohedral calcium carbonate, and may comprise color or be uncolored. In some aspects, the initial multiple layers of coating syrup comprise scalenohedral calcium carbonate, and thereafter, multiple layers of coating syrup do not comprise scalenohedral calcium carbonate, are applied to the core or a prepared surface of the core. In such aspects, additional layers of coating syrup comprising one or more colorants and with or without scalenohedral calcium carbonate are applied over the sugar syrup layers without colorant.

Typically, fewer than 55, or fewer than 50, or fewer than 45, or fewer than 35, or fewer than 30, or fewer than 25, or fewer than 20, or fewer than 15 syrup coating layers containing scalenohedral calcium carbonate may be provided in the hard-panned coating. In a preferred aspect, fewer than the first 30 syrup coating layers contain scalenohedral calcium carbonate.

If the edible coating is to be colored, a colorant composition can be added to a coating syrup in the later stages of the coating process. In some instances, for a hard-panned confectionery product, following the application of a number of layers of the uncolored sugar syrup to build up the sugar coating, a number of applications of a sugar syrup comprising a colorant composition are applied to provide the color to the finished coating. In certain aspects, the color coat can require 5, 10, 15, 20 or more applications of a colored coating solution to achieve the desired color. A polish coating can be applied to the outer surface of the coating to make the appearance shiny.

The applied sugar or polyol syrup solution is typically dried and crystallized by passing air into the revolving pan. The air may be dehumidified and/or heated. When dealing with heat-sensitive confectionery centers, such as chocolate, the air temperature must be controlled to avoid damaging the center. A flavorant may be applied after a syrup coating has been dried, the flavorant can be dried with or without the use of a drying medium.

A typical soft panning process generally includes applying a coating of a noncrystallizing syrup solution followed by addition of crystalline sugar. This process is repeated until the desired number of coatings has been obtained. In certain processes, the soft coating can be formed by adding a dry charge or powder coating before or after a liquid coating. The dry charge may comprise natural carbohydrate gum hydrolysates, maltodextrin, gelatin, cellulose derivatives, starches, modified starches, sugars, sugar alcohols (i.e. polyols), natural carbohydrate gums and fillers like talc and calcium carbonate.

### 3.1 Additional Components

In certain aspects of the disclosed subject matter, the edible coatings can further include one or more additional components. For example, the edible coatings can include any suitable thickeners and binders, as necessary to ensure suitable viscosity and compatibility with an underlying surface. As used herein, the term suitable viscosity means a coating viscosity that allows acceptable performance with the coating apparatus. As used herein, compatibility with the surface means a coating with wetting and drying characteristics such that the application of the coating to the surface conforms to the intended overall appearance of the finished coated product.

As embodied herein, any additional materials included in the edible coatings should be compatible with the scalenohedral calcium carbonate particles, so as to not detract from the white color provided by the calcium carbonate. Also, any additional materials should not detract from the performance of the coating. Additional components include, but are not limited to, colorants, preservatives, natural or artificial flavor compounds, plasticizers, dispersants, emulsifiers, fillers, micronutrients, etc.

### 4. Food Products

Alternatively, the food products can include snack food products such as fruit snacks, chips/crisps, pretzels, nuts, granola/muesli bars, breakfast bars, energy bars, fruit bars, and other snack bars. In particular aspects, the food product can be a chocolate-coated food product. As a further alternative, the edible coating can be used on the surface of a pharmaceutical product, such as a tablet, capsule, or coated pharmaceutical product, or any other consumer product with a suitable surface for edible coating syrups.

### EXAMPLES

The presently disclosed subject matter will be better understood by reference to the following Examples, which are provided as exemplary of the disclosed subject matter, and not by way of limitation.

Several different crystallizing coatings are prepared and coated onto confectionery cores according to a conventional process. In a typical coating or panning process, a confectionery center is provided in a revolving pan and coating syrup is applied thereto. The coating process can be repeated multiple times until the desired coating structure has been obtained. Each coating step can be carried out any number of times before moving to the next coating step. The amount of layers contained in each coating section may vary to meet the desired coating attributes (i.e., thickness, crunch, texture, etc.). In some cases, after a coating is applied, time is allowed for the coating to dry before a subsequent coating is applied.

The sucrose syrups used in the crystallizing coatings of the present application have a Brix range of about 50 to about 75, or about 65 to about 75. In one aspect, the Brix range of the sucrose syrup is about 50 to about 60. In another aspect, the Brix range of the sucrose syrup is about 60 to about 70, or the Brix range of the sucrose syrup is about 70 to about 75. Alternatively, the first base coating section contain sucrose syrup layers with a Brix range of about 65 to about 70, and the second, third, fourth, etc., coating sections contain sucrose syrup layers with a Brix range of about 70 to about 75. In yet another aspect, the first base coating section contains scalenohedral calcium carbonate, and has a Brix range of 65 to 70.

In the present application, the later sugar syrup layers of the following examples contain turmeric which is a non-artificial colorant providing a yellow color.

### Example 1 (Comparative) - Finished Yellow Candies with No Opacity Agent Added

240 kg of solid milk chocolate centers were loaded into a rotating pan, where the chocolate centers rotate, tumble and cascade over one another.

A first base coating syrup was prepared composed of a sucrose syrup and corn syrup in a ratio of 95:5 by weight percent. This base coating syrup was applied to the tumbling centers in 15 applications. These applications created a series of layers with drying air applied in between applications. Next, an additional 15 applications of sucrose syrup was applied as a second base coating syrup and dried after each application to complete the base coating section.

Next, clear sucrose syrup was applied to the candy in the rotating pan as a series of 5 equal applications of sucrose syrup per layer. After each application of syrup, the syrup was allowed to roll in to evenly distribute the syrup across the centers. After each rolling in step, drying air was applied to dry and crystallize the sucrose. The application and drying of the clear syrup layers formed a second coating section on the candy.

Next, yellow colored coating syrup was prepared from sucrose syrup mixed with a Turmeric colorant powder at 0.8 weight percent in the syrup (CAPCOLORS^{®}, Christian Hansen, Denmark). The yellow colored syrup was applied to the base coated candy in the rotating pan as a series of 17 equal applications. After the application of syrup, the syrup was allowed to roll in to evenly distribute the syrup across the centers.

After each rolling in step, drying air was applied to dry and crystallize the sucrose. The application and drying of the yellow colored syrup layers formed a third coating section on the candy. Finally, a carnauba wax was applied as a polishing treatment to produce the finished candy. Ten finished coated candy pieces were analyzed using a Konica Minolta CM-5 operated in reflectance mode (specular component excluded) with a D65 illuminant and 10° observer angle. The L*, C* and h* values for the 10 sample measurements are averaged and the standard deviation can be calculated using the CM-5 software (SpectraMagic NX).

Table 1 below summarizes the finished edible coating composition of Example 1 (Comparative). The average values from the Colorimeter for Example 1 are shown below in Table 3.

**Table 1 - Comparative Example 1**

| | Composition - Example 1 (Comparative) | No. of Applications/Layers |
|---|---|---|
| First/ Base Coating Section | | |
| | Sucrose syrup /corn syrup in a ratio of 95:5 by weight percent | 15 |
| | Sucrose syrup | 15 |
| Second Coating Section | | |
| | Clear sucrose syrup | 5 |
| Third Coating Section | Sucrose / Turmeric | 17 |
| Polishing | Carnauba wax | 1 |

### Example 2 (Inventive) - Finished Yellow Colored Candies with Scalenohedral Calcium Carbonate in 1^{st} (Base) and 2^{nd} Coating Sections

240 kg of solid milk chocolate centers were loaded into a rotating pan and the pan was started rotating to tumble the centers. A first base coating syrup was prepared composed of a sucrose syrup, corn syrup and scalenohedral Calcium Carbonate in a ratio of 75:5:20 by weight percent. This base coating syrup was applied to the tumbling centers in 15 applications. These applications created a series of layers with drying air applied in between applications.

Next, an additional 15 applications of sucrose syrup was applied as a second base coating syrup and dried to complete the base coating section. Next, sucrose syrup with scalenohedral calcium carbonate was prepared which was composed of sucrose syrup and scalenohedral calcium carbonate in a ratio of 90:10 weight percent. This coating syrup with scalenohedral calcium carbonate was applied to the base coated candy in the rotating pan as a series of 5 equal applications. After each application of syrup, the syrup was allowed to roll in to evenly distribute the syrup across the centers. After each rolling in step, drying air was applied to dry and crystallize the sucrose. The application and drying of the syrup layers with scalenohedral calcium carbonate formed a second coating section on the candy.

Next, yellow colored coating syrup was prepared from sucrose syrup mixed with a Turmeric colorant powder at 0.8 weight percent in the syrup (CAPCOLORS^{®}, Christian Hansen, Denmark). The yellow colored syrup was applied to the candy in the rotating pan as a series of 17 equal applications. After the application of syrup, the syrup was allowed to roll in to evenly distribute the syrup across the centers. After each rolling in step, drying air was applied to dry and crystallize the sucrose. The application and drying of the yellow colored syrup layers formed a third coating section on the candy.

Finally, a carnauba wax was applied as a polishing treatment to produce the finished candy. Ten finished coated candy pieces were analyzed using a Konica Minolta CM-5 operated in reflectance mode (specular component excluded) with a D65 illuminant and 10° observer angle. The L*, C* and h* values for the 10 sample measurements are averaged and the standard deviation can be calculated using the CM-5 software (SpectraMagic NX).

Table 2 below summarizes the finished edible coating composition of Example 2 (Comparative). The average values from the Colorimeter for Example 2 are shown below in Table 3. The results show that the lightness value L* increased by 6.83 and the chroma value C* increased by 6.42. The visual results can be seen in Table 2 below. The candies with scalenohedral Calcium carbonate in the first two sections of the coating are brighter and display a more intense yellow color, which is reflected in the higher L* and C* values, respectively.

**Table 2 - Inventive Example 2**

| | Composition - Example 2 (Inventive) | No. of Applications/Layers |
|---|---|---|
| First/ Base Coating Section | | |
| | Sucrose syrup /corn syrup / scalenohedral calcium carbonate in a ratio of 75:5:20 by weight percent | 15 |
| | Sucrose syrup | 15 |
| Second Coating Section | | |
| | Clear sucrose syrup /scalenohedral Calcium carbonate in a ratio of 90: 10 weight percent | 5 |
| Third Coating Section | Sucrose / Turmeric | 17 |
| Polishing | Carnauba wax | 1 |

**Table 3 - L*C*h* Color Values of Examples 1 & 2**

| **Sample** | **L*** | **C*** | **h*** |
|---|---|---|---|
| Example 1 Comparative - No Opacifier in Coating | 62.70 | 63.10 | 86.53 |
| Example 2 Inventive - Scalenohedral calcium carbonate in Coating | 69.53 | 69.52 | 84.09 |

## Claims

1. An edible coating, comprising scalenohedral calcium carbonate particles in an amount of from about 1 wt-% to about 30 wt-% by weight of coating, wherein the coating comprises sugar.

2. The edible coating of claim 1, wherein the scalenohedral calcium carbonate particles are present in an amount of from about 10 wt-% to about 15 wt-%.

3. The edible coating of claim 1, wherein the scalenohedral calcium carbonate particles have a median particle size of from about 0.5 µm to about 5 µm, optionally wherein the scalenohedral calcium carbonate particles have a median particle size of from about 1.5 µm to about 3 µm.

4. The edible coating of claim 1, wherein the lightness value L* and chroma value C* are increased by about 1 compared to the values of the edible coating that does not contain the scalenohedral calcium carbonate particles.

5. The edible coating of claim 1, wherein the sugar is sucrose or dextrose.

6. The edible coating of claim 1, wherein the coating comprises a polyol.

7. The edible coating of claim 1, further comprising a colorant.

8. A food product containing an edible color-free coating of claim 1 wherein the lightness value L* of the edible color-free coating is at least about 65.

9. The food product of claim 8, wherein the food product is a confectionery product.

10. The confectionery product of claim 9, wherein the confectionery product is a hard-panned candy.

11. The confectionery product of claim 9, wherein the confectionery product is a soft-panned candy.

12. The edible coating of claim 1, wherein the lightness value L* and chroma value C* are increased by about 1 compared to the values of the edible coating that does not contain an opacifier.

13. A method of edible coating a food product to form a food product of claim 8, the method comprising:
a) providing a surface of a food product;
b) contacting a coating syrup comprising scalenohedral calcium carbonate particles with the surface of the food product; and
c) contacting the coating syrup comprising the scalenohedral particles with additional coating syrups that are free of scalenohedral calcium carbonate particles.

14. The method of claim 13, further comprising treating the surface of the food product prior to contacting the surface with the coating syrup comprising the scalenohedral calcium carbonate particles.

15. The method of claim 13, wherein the food product is a confectionery product, preferably, wherein the confectionery product is a hard-panned candy, and further preferably wherein the hard-panned candy comprises a polish coating.

## Patentansprüche

1. Essbarer Überzug, umfassend skalenoedrische Calciumcarbonatpartikel in einer Menge von etwa 1 Gew.-% bis etwa 30 Gew.-% bezogen auf das Gewicht des Überzugs, wobei der Überzug Zucker umfasst.

2. Essbarer Überzug gemäß Anspruch 1, wobei die skalenoedrischen Calciumcarbonatpartikel in einer Menge von etwa 10 Gew.-% bis etwa 15 Gew.-% vorhanden sind.

3. Essbarer Überzug gemäß Anspruch 1, wobei die skalenoedrischen Calciumcarbonatpartikel eine mediane Partikelgröße von etwa 0,5 um bis etwa 5 um aufweisen, gegebenenfalls wobei die skalenoedrischen Calciumcarbonatpartikel eine mediane Partikelgröße von etwa 1,5 um bis etwa 3 um aufweisen.

4. Essbarer Überzug gemäß Anspruch 1, wobei der Helligkeitswert L* und der Chroma-Wert C* im Vergleich zu den Werten des essbaren Überzugs, der die skalenoedrischen Calciumcarbonatpartikel nicht enthält, um etwa 1 erhöht sind.

5. Essbarer Überzug gemäß Anspruch 1, wobei der Zucker Saccharose oder Dextrose ist.

6. Essbarer Überzug gemäß Anspruch 1, wobei der Überzug ein Polyol umfasst.

7. Essbarer Überzug gemäß Anspruch 1, ferner umfassend ein Farbmittel.

8. Lebensmittelprodukt, enthaltend einen essbaren farblosen Überzug gemäß Anspruch 1, wobei der Helligkeitswert L* des essbaren farblosen Überzugs wenigstens etwa 65 beträgt.

9. Lebensmittelprodukt gemäß Anspruch 8, wobei das Lebensmittelprodukt ein Süßwarenprodukt ist.

10. Süßwarenprodukt gemäß Anspruch 9, wobei das Süßwarenprodukt ein Hartbonbon ist.

11. Süßwarenprodukt gemäß Anspruch 9, wobei das Süßwarenprodukt ein Kaubonbon ist.

12. Essbarer Überzug gemäß Anspruch 1, wobei der Helligkeitswert L* und der Chroma-Wert C* im Vergleich zu den Werten des essbaren Überzugs, der kein Trübungsmittel enthält, um etwa 1 erhöht sind.

13. Verfahren essbaren Überziehen eines Lebensmittelprodukts, um ein Lebensmittelprodukt gemäß Anspruch 8 zu bilden, wobei das Verfahren umfasst:
a) Bereitstellen einer Oberfläche eines Lebensmittelprodukts;
b) Inkontaktbringen eines Beschichtungssirups, der skalenoedrische Calciumcarbonatpartikel umfasst, mit der Oberfläche des Lebensmittelprodukts; und
c) Inkontaktbringen des Beschichtungssirups, der die skalenoedrischen Partikel umfasst, mit zusätzlichen Beschichtungssirupen, die frei von skalenoedrischen Calciumcarbonatpartikeln sind.

14. Verfahren gemäß Anspruch 13, ferner umfassend Behandeln der Oberfläche des Lebensmittelprodukts vor Inkontaktbringen der Oberfläche mit dem Beschichtungssirup, der die skalenoedrischen Calciumcarbonatpartikel umfasst.

15. Verfahren gemäß Anspruch 13, wobei das Lebensmittelprodukt ein Süßwarenprodukt ist, wobei das Süßwarenprodukt vorzugsweise ein Hartbonbon ist und wobei das Hartbonbon ferner vorzugsweise einen Glanzüberzug umfasst.

## Revendications

1. Revêtement comestible, comprenant des particules de carbonate de calcium scalénoédriques en une quantité allant d'environ 1 % en poids à environ 30 % en poids du revêtement, dans lequel le revêtement comprend du sucre.

2. Revêtement comestible selon la revendication 1, dans lequel les particules de carbonate de calcium scalénoédriques sont présentes en une quantité allant d'environ 10 % en poids à environ 15 % en poids.

3. Revêtement comestible selon la revendication 1, dans lequel les particules de carbonate de calcium scalénoédriques ont une taille médiane de particule allant d'environ 0,5 um à environ 5 um, dans lequel, éventuellement, les particules de carbonate de calcium scalénoédrique ont une taille médiane de particule allant d'environ 1,5 um à environ 3 um.

4. Revêtement comestible selon la revendication 1, dans lequel la valeur de luminosité L* et la valeur de chroma C* sont augmentées d'environ 1 par rapport aux valeurs du revêtement comestible qui ne contient pas les particules de carbonate de calcium scalénohédrique.

5. Revêtement comestible selon la revendication 1, dans lequel le sucre est du saccharose ou du dextrose.

6. Revêtement comestible selon la revendication 1, dans lequel le revêtement comprend un polyol.

7. Revêtement comestible selon la revendication 1, comprenant en outre une matière colorante.

8. Produit alimentaire contenant un revêtement sans couleur comestible selon la revendication 1 dans lequel la valeur de luminosité L* du revêtement sans couleur comestible est d'au moins 65.

9. Produit alimentaire selon la revendication 8, dans lequel le produit alimentaire est un produit de confiserie.

10. Produit de confiserie selon la revendication 9, dans lequel le produit de confiserie est un bonbon dragéifié dur.

11. Produit de confiserie selon la revendication 9, dans lequel le produit de confiserie est un bonbon dragéifié mou.

12. Revêtement comestible selon la revendication 1, dans lequel la valeur de luminosité L* et la valeur de chroma C* sont augmentées d'environ 1 par rapport aux valeurs du revêtement comestible qui ne contient pas d'opacifiant.

13. Procédé de revêtement comestible d'un produit alimentaire pour former un produit alimentaire selon la revendication 8, le procédé comprenant :
a) la fourniture d'une surface d'un produit alimentaire ;
b) la mise en contact d'un sirop de revêtement comprenant des particules de carbonate de calcium scalénoédriques avec la surface du produit alimentaire ; et
c) la mise en contact du sirop de revêtement comprenant les particules scalénoédriques avec des sirops de revêtement supplémentaires exempts de particules de carbonate de calcium scalénoédriques.

14. Procédé selon la revendication 13, comprenant en outre le traitement de la surface du produit alimentaire avant la mise en contact de la surface avec le sirop de revêtement comprenant les particules de carbonate de calcium scalénoédriques.

15. Procédé selon la revendication 13, dans lequel le produit alimentaire est un produit de confiserie, de préférence, dans lequel le produit de confiserie est un bonbon dragéifié dur, et en outre de préférence dans lequel le bonbon dragéifié dur comprend un vernis.
